# EUROPEAN PATENT SPECIFICATION

(11) **EP 4 363 195 B1**
(45) Date of publication and mention of the grant of the patent: **09.07.2025**
(21) Application number: 21752738.1
(22) Date of filing: 29.06.2021
(51) Int. Cl.: B29C 49/64, B29C 49/78, B29C 49/06, B29K 67/00, B29K 23/00, B29L 31/00

(54) **METHOD OF THERMAL IMAGING FOR A BLOW MOLDING PROCESS**
VERFAHREN ZUR THERMISCHEN BILDFORMUNG FÜR EIN BLASFORMVERFAHREN
PROCÉDÉ D'IMAGERIE THERMIQUE POUR UN PROCÉDÉ DE MOULAGE PAR SOUFFLAGE

(43) Date of publication of application: 08.05.2024
(73) Proprietor: Discma AG, 6331 Hünenberg (CH)
(72) Inventor: SIERADZKI, Richard, Frankfort, Illinois 60423 (US)
(74) Representative: Barker Brettell LLP
(86) International application number: PCT/IB2021/055811
(87) International publication number: WO 2023/275591

(56) References cited:
- EP-A1- 3 181 328
- US-A1- 2004 024 560
- US-A1- 2012 326 345
- US-A1- 2018 264 707

## Description

### FIELD OF THE INVENTION

The present technology relates to systems and processes for producing a plurality of preforms having a plurality of temperature profiles, including where such preforms can be subjected to blow molding processes.

### BACKGROUND OF THE INVENTION

This section provides background information related to the present disclosure which is not necessarily prior art.

Various products are distributed in plastic containers, such as containers formed from one or more polymers. Common polymers used to form containers include polyesters, such as polyethylene terephthalate (PET), high and low density polyethylenes (PE), polypropylenes (PP), and polycarbonates (PC), among others. Plastic containers can be made using various blow molding processes including injection blow molding, liquid or hydraulic blow molding, and extrusion blow molding, where such blow molding processes can employ a preform that is expanded by a fluid to form a resultant container.

Injection blow molding can be used to form certain plastic containers in one or more stages and can include use of a stretch rod. In a two-stage injection stretch blow molding process, a polymer can be first molded into a preform using an injection molding process. The preform can include the neck and finish of the container to be formed, which can include threading thereon, and a closed distal end. The preform can then be heated above the polymer glass transition temperature, optionally stretched longitudinally with a stretch rod, and blown using high-pressure gas (e.g., air) into a container conforming to a mold. As the preform is inflated, it elongates and stretches, taking on the shape of the mold cavity. The polymer solidifies upon contacting the cooler surface of the mold and the finished hollow container is subsequently ejected from the mold.

Liquid or hydraulic blow molding can form and fill a container in a single operation. A liquid product can be used to form and fill a polymeric preform within a mold into a resultant container, where the liquid product remains thereafter in the finished container. A heated preform, much like the preform used in injection blow molding, can be placed within the mold, optionally stretched, and rapidly filled using a liquid product instead of a gas to form a container therefrom. Combination of the forming and filling steps can therefore optimize packaging of a liquid product by eliminating the transport of empty containers and time demands related to subsequent filling operations.

Various types of preforms can be used in such blow molding processes. Certain embodiments of preforms include injection-molded, rotationally symmetric preforms that have an elongated, cylindrical, lateral body section, a rounded, closed bottom, and a neck section with an upper opening. Other preforms have be rotationally asymmetric with a varying thickness along an elongate axis to facilitate a material distribution that forms an asymmetric container. In either case, positioned proximate to the opening, there can be an outer threaded finish section, which can be delimited toward a bottom thereof by a collar or the like. The threaded finish section can be preserved during blow molding of the preform where the finish can form a thread for a screw cap of a finished beverage container, for example. The remaining portion of the preform, in contrast, can be deformed and stretched during the blow molding process. Preforms can be heated to predefined temperatures in order to enable blow molding in the desired manner. Heating can be performed by various means, including infrared radiation using an infrared oven, to effect defined and/or uniform temperature control of the preforms.

In particular, the polymeric material of the preform (e.g., PET) can be of such a nature that the polymer can strain harden as the polymer is stretched. Forming temperature during the blow molding process can therefore be a determinative factor in the resultant container. The strain hardening effect can be taken into consideration in the production of PET containers for the purpose of controlling and optimizing wall thickness distribution. Depending on the production process, it can be possible to apply heat via infrared radiation in such a way that the preforms are heated according to a temperature profile. In this manner, the warmer sections of the preform can be deformed with priority over other parts as long as is required for the stretching resistance resulting from strain hardening to become greater than the resistance of the adjacent cooler sections, for example. The temperature profile can be uniformly distributed around the circumference of the preforms and can vary processdependently along the longitudinal axis of the preforms. In order to apply the desired temperature profile to the preforms, use a number of heating zones can be used, for instance up to nine or more zones. It is possible to control the plurality of different heating zones individually, whereby the selected setting is maintained constant over a longer period of operating the heating apparatus.

Preforms of different construction can require different heating regimens in preparation for blow molding into resultant containers. For example, preforms of different sizes, shapes, thicknesses, formed of or including different polymers or polymer combinations, layers, and the like can each have a predetermined temperature profile optimized for a particular blow molding process. Certain examples include different heating regimens for effecting different temperature profiles for PET preforms versus PP preforms. Other examples include different heating regimens for effecting the same temperature profile, but where the preforms have different characteristics that require different regimens to achieve the same temperature profile; e.g., preforms formed of the same material but having different thicknesses. Accordingly, various heating parameters can be tailored for particular preforms, including the number of heating zones, the temperature of certain heating zones, the exposure time to certain heating zones, and the like.

A blow molding system can often include a preform heating means in close proximity thereto, where heated preforms can be passed to a mold in short order and formed into resultant containers before a desired temperature profile of the preforms changes. A travel path of a preform through an infrared oven, for example, can be tailored to generate a predetermined temperature profile in a given preform. However, if a condition of the blow molding system and/or process is changed, it can be necessary to change the preform path or heating means to adapt to a new temperature profile for a given preform. Changes in blow molding conditions can include the use of another preform type, a change in the mold, changes in blow molding parameters, and the like. Accordingly, it can be difficult to adapt a blow molding system and/or process to changing conditions that require changes in preform temperature profiles while maintaining continuous or high throughput production of containers. Oftentimes, one or more settings may need to be changed, one or more new equilibriums reached, and one or more physical parameters may need to be adapted in the blow molding system in order to accommodate preforms having different characteristics.

Absent appropriate temperature control, a heated preform may have an improper material distribution and/or expansion during a blow molding operation and the resulting container may rupture (or "blowout") or otherwise fail an aesthetic inspection. For refined gas blow molding processes, it can be expected that from about 1500 to about 2500 containers per one million gas blow molded container will suffer from a blowout. The expected blowouts from a liquid blow molded container is roughly the same. In the instance of liquid blow molding, a blowout will result in more than escape of air and will result in an escape and possible waste of the liquid product to fill the container. When the blow molding liquid is water, a blowout may result in little more than wasted water and negligible down time to allow the blow molding equipment to dry. When the blow molding liquid is a petroleum product, medicine, or cosmetic, for example, a blowout can result in a significant of time due to cleaning procedures required to render the blow molding equipment once-again operational and can result in wasted and unusable product, each of which alone may create a significant economic impact on the blowing molding process and product cost but combined may render the liquid blow molding process economically unfeasible for packing the product. It would be desirable to develop a method of blow molding that would reduce the expected blowouts for a blow molding operation (liquid or gas) to about 25 blowouts per million containers formed.

In consideration of these issues, the present technology provides a method of thermal imaging a preform prior to a blow molding operation to minimize blowouts, where the resulting blow molding operation can be maintained in a continuous or high throughput fashion.
US 2012/326345 A1 is considered to represent the closest prior art and its disclosure forms the basis of the pre-characterizing portion of claim 1. Further background information on heating preforms prior to blow molding can be obtained from US 2004/024560 A1, US 2018/264707 A1, and EP 3 181 328 A1.

### SUMMARY OF THE INVENTION

The invention provides a method as defined in claim 1. Optional features are defined in the dependent claims.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Fig. 1 is a plan view schematically depicting an oven for the heat treatment and thermal imaging of preforms;
Fig. 2 is a sectional view of one of the heating means of Fig. 1 and including a preform heated thereby;
Fig. 3 is an exemplary three-dimensional thermal image of a heated preform and a corresponding two-dimensional thermal image derived therefrom;
Fig. 4 shows the images of Fig. 3 selectively dissected; and
Fig. 5 is a side-by-side comparison of the two-dimensional thermal image of Fig. 3 with a graphical representation of the thermal data used to generate the image.

### DETAILED DESCRIPTION OF EXEMPLARY EMBODIMENTS OF THE INVENTION

The following description of technology is merely exemplary in nature of the subject matter, manufacture and use of one or more inventions, and is not intended to limit the scope, application, or uses of any specific invention claimed in this application or in such other applications as can be filed claiming priority to this application, or patents issuing therefrom. Regarding methods disclosed, the order of the steps presented is exemplary in nature, and thus, the order of the steps can be different in various embodiments, including where certain steps can be simultaneously performed. "A" and "an" as used herein indicate "at least one" of the item is present; a plurality of such items can be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that can arise from ordinary methods of measuring or using such parameters.

Although the open-ended term "comprising," as a synonym of nonrestrictive terms such as including, containing, or having, is used herein to describe and claim embodiments of the present technology, embodiments can alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that can be recited in the art, even though element D is not explicitly described as being excluded herein.

As referred to herein, disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter can define endpoints for a range of values that can be claimed for the parameter. For example, if Parameter X is exemplified herein to have value A and also exemplified to have value Z, it is envisioned that Parameter X can have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X can have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it can be directly on, engaged, connected or coupled to the other element or layer, or intervening elements or layers can be present. In contrast, when an element is referred to as being "directly on," "directly engaged to," "directly connected to" or "directly coupled to" another element or layer, there can be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. can be used herein to describe various elements, components, regions, layers and/or sections, these elements, components, regions, layers and/or sections should not be limited by these terms. These terms can be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, can be used herein for ease of description to describe one element or feature's relationship to another element(s) or feature(s) as illustrated in the figures. Spatially relative terms can be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device can be otherwise oriented (rotated 90 degrees or at other orientations) and the spatially relative descriptors used herein interpreted accordingly.

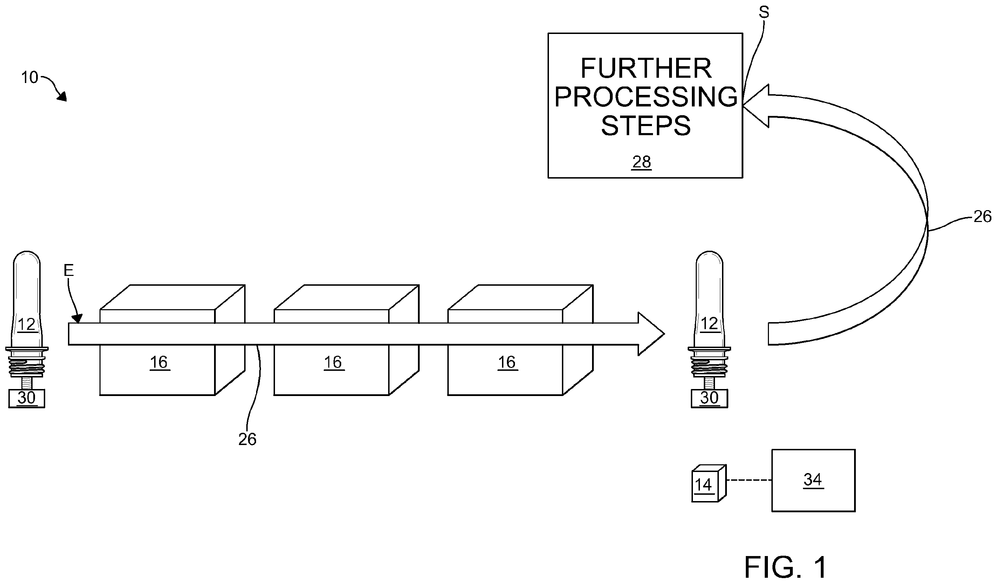

As shown in Fig. 1, the present technology is drawn to method of thermal imaging using a heating system 10 and method for thermal imaging a preform 12 and its temperature profiles and ways of using such systems, especially in blow molding a container (not shown) from the preform 12. The system 10, explained in more detail hereinbelow, generally includes a camera 14 and a heating means 16.

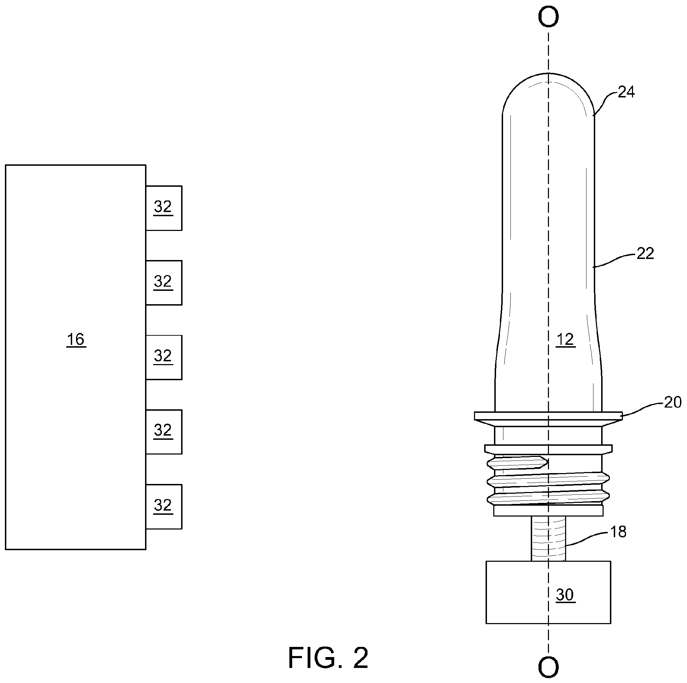

With respect to the preform 12, Fig. 2 shows an exemplary preform 12 having an elongate axis O having an overall shape resembling a test tube. The preform 12 has a neck 18, a shoulder 20, a body 22, and a rounded, closed bottom 24. Typically, the neck 18 and the shoulder 20 is each formed and in its definitive shape as it enters the system 10 and does not need to be heated or thermally imaged as contemplated herein. Accordingly, typically only the body 22 and the bottom 24 are heat treated and thermally imaged by the system 10, though the entire preform 12 may be heated, as desired. The tubular body 22 of the preform 12 is closed at an upper end by the hemispherical bottom 24 and at its lower end comprises the neck 18 which is already in the definitive shape of the neck 18 of the container, the annular shoulder 20 which extends radially outwards roughly delineates the unheated portion of the preform 12 from the heated portion thereof. The preform 12 may be formed of a polyester material, such as polyethylene terephthalate (PET) and other polyesters, polypropylene, acrylonitrile acid esters, vinyl chlorides, polyolefins, polyamides, and the like, as well as derivatives, blends, and copolymers thereof. As shown, the preform 12 has a shape well known to those skilled in the art similar to a test-tube with a generally cylindrical cross section and a length typically approximately fifty percent (50%) that of the resultant container height, or the preform 12 may have any shape, length, and formed from any material, as desired. As explained hereinabove, the heat treatment performed in the system 10 is intended at preparing the preform 12 for conversion, by blow molding with a gas or a liquid, so as to shape each preform 12 into the container.

In the system 10, each preform 12 is provided at an entrance of in-feed station E by way of a mag-lev track, rail, or other transport mechanism (not shown). The preforms 12 are then individually placed onto a conveyor 26, which transports the preforms 12 through the system 10, as detailed hereinbelow, and ultimately to an exit S of the system 10 for further processing steps 28. The further processing steps 28 may include transporting the preform 12 for one of re-entry into the entrance E for additional heating, rejection and recycling, or to a blow mold loading station (not shown) for forming the preform 12 into the container.

Each preform 12 enters the system 10 (at ambient temperature) disposed on a spindle 30 (as shown in Fig. 2) which allows for the 360° rotation thereof as the preform 12 traverses therethrough. Each preform 12 is transported via the conveyor 26 through the system 10 and past a series of heating means 16. The heating means 16 may be an infrared oven, for example, or any suitable heating means as known by one of ordinary skill in the blow molding art. Direct and/or indirect (e.g., reflected) thermal energy can be applied by the heating means 16. Multidirectional application of thermal energy can be used as well as where preforms 12 themselves are moved, spun, or rotated about various thermal radiation sources in the various heating means 16. Any number of heating means 16 may be utilized, as desired, but, as shown in Fig. 1, the system 10 includes three (3) heating means 16. As best shown in Fig. 2, each heating means 16 comprises five (5) heating elements 32 to facilitate heating of each preform 12 at different heights thereof along the longitudinal axis O. It is understood that the number of heating means 16 and the heating elements 32 present in the heating means 16, or operation thereof during a given process, may vary based on the size or specifications of each preform 12, material properties of each preform 12, and the like. The heating means 16 are spaced longitudinally along the conveyor 26 through the system 10 so as to introduce into the preforms 12 a desired heat profile that will allow for optimization of the distribution of the plastic material during the remaining steps in a pre-stretch and blow molding process. The heat profile may vary or define a gradient along the longitudinal axis O of each preform 12. Alternatively, the heat profile may be constant over the length of the preforms 12. Additionally, the heat profile may vary across the thickness of the preforms 12 with, for example, the material on the exterior of the preform 12 being at a higher temperature than the material on the interior of the preform 12. The actual heat profile will depend on the specific design of the preform 12, including its shape and material composition, material distribution, and the design of the resulting container to be formed. As each preform 12 passes the heating means 16, each preform 12 is rotated on its spindle 30 thus being heated by the heating means 16 until each preform 12 reaches a camera 14.

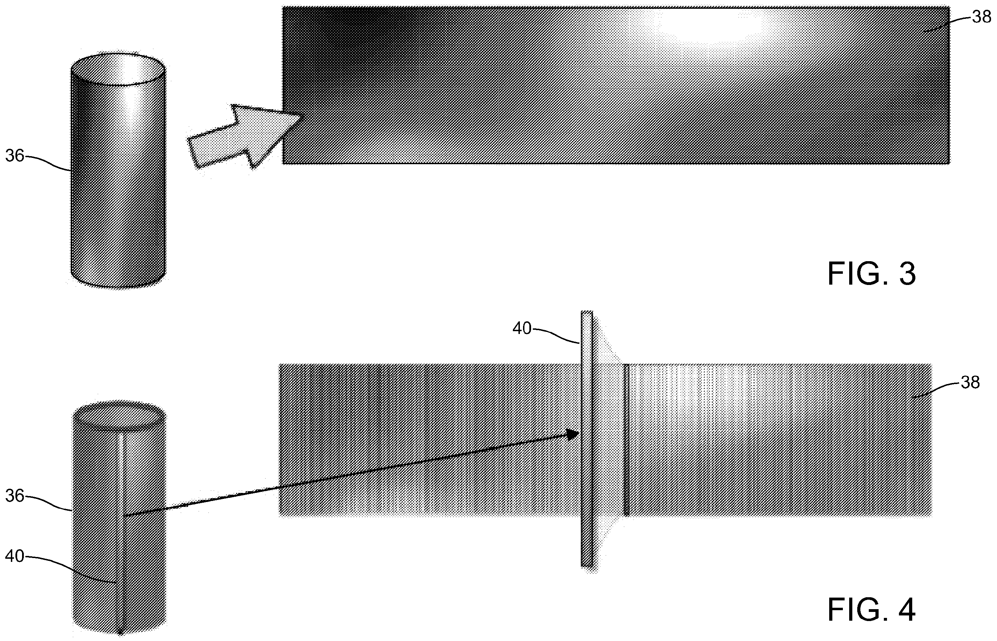

As shown in Fig. 1, the camera 14 is an infrared camera adapted to inspect and measure the temperature of each preform 12 along the longitudinal axis O thereof and around an entire circumference thereof. The camera 14 measures a temperature of the preform 12 along its axis O and circumference at a defined and desired number of data points and/or at a desired resolution (as constrained by the camera 14). For example, data points may correspond to a height of each of the heating elements 32 and/or portions of the preform 12 therebetween along each degree of the circumference of the preform 12 and/or areas therebetween. The camera 14 is in electronic communication with a computer 34 or other data processor (not shown) capable of processing and/or tabulating the thermal characteristics data measured by the camera 14. For example, the computer 34 converts the thermal characteristics data of the preform 12 into a three-dimensional thermal image 36 of each preform 12, as best shown in Fig. 3. The computer 34 may then convert the three-dimensional thermal image 36 into a two-dimensional thermal image 38 (also known as a heat map). Alternatively, the computer 34 may convert the thermal characteristics data directly into the two-dimensional thermal image 38. The image 38, when viewed left to right, is a representation of a temperature measurement of the preform 12 from about 0° to about 359° taken as the preform 12 rotates on the spindle 30. Thus, the temperature profile of the three-dimensional preform 12 may be viewed in two dimensions. Furthermore, the temperature profile of the preform 12 may be viewed as a whole or at desired areas, for example, along a longitudinal area 40, as shown in Fig. 4. As an example and as best shown in Fig. 4, the three-dimensional thermal image 36 can be divided into a desired number of longitudinal areas such as, for example, three-hundred fifty-nine (359) longitudinal areas corresponding to each degree of the preform 12 as rotated about its axis O from about 0° to about 359°. In this way, a particular longitudinal area 40 of the three-dimensional thermal image 36 and of the preform 12 itself can be more easily and readily observed on the two-dimensional thermal image 38 without the requirement to access and/or rotate the three-dimensional thermal image 36.

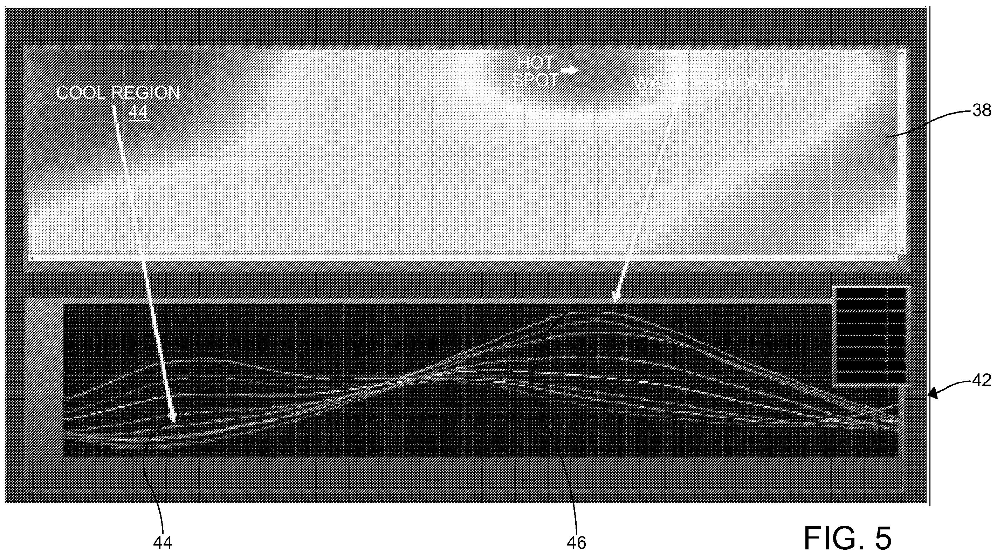

As noted above, the temperatures of the preform 12 are tabulated by the computer 34. The temperatures measured are then plotted against the position of the measurement on the preform 12, as shown in a graph 42 in Fig. 5. As shown on the graph 42, the temperature of the preform 12 at each temperature measurement taken by the camera 14 (x-axis) is plotted against the position of such measurement on the preform 12 (x-axis). In this way, the graph 42, a numerical/ graphical representation of the temperature measurements, can be readily compared and directly correlates to the two-dimensional thermal image 38, a color-based heat map.

By creating the two-dimensional thermal image 38, temperature measurements of the heated preform 12 may be readily and easily ascertained before the preform 12 is transferred to the blow molding station and molded into the final container. In some instances, the thermal images 36, 38 and/or the graph 42 may indicate that a preform 12 has "cool regions" 44 or "warm regions" 46. Such regions 44, 46 may result in blowouts during blow molding, thus requiring remedial action during the heating of the preform 12. Because the exact location of such regions 44, 46 can be pinpointed by observance and analysis of the thermal images 36, 38 and/or the graph 42, remedial action can be taken to ensure proper heating of the preform 12 to minimize blowouts during blow molding thereof into the container. The remedial action may include adjustment of one or more of process parameters and settings of the system 10, including adjustment of the heating means 16 or specific heating elements 32, to increase or decrease the temperature of any portion of the preform 12 (e.g., the regions 44, 46), as desired, so that subsequent preforms have a different and acceptable temperature profile to minimize blowouts during blow molding. Additional remedial actions include, for example, upwardly or downwardly adjusting the spin rate of the spindle 30 upon which each preform 12 is disposed, or increasing or decreasing the residence time of the preform 12 (or speed of the conveyor 26) within the system 10, and/or cooling airflow within the system 10 may be increased or decreased.

## Claims

1. A method for heating a preform (12) for blow molding, the method comprising the steps of:
providing a preform (12) suitable for blow molding;
heating the preform (12) during transport of the preform (12) through a heating system (10) comprising a conveyor (26), at least one heating means (16), and a camera (14), the heating system (10) including an entrance (E) where the preform (12) enters the heating system and an exit (S) where the preform (12) exits the heating system (10); and
measuring, by the camera (14), the temperature of at least a portion of the preform (12) along its longitudinal axis and around its circumference after transport of the preform past the at least one heating means (16) of the heating system (10) and before the preform (12) is transported to the exit (S) of the heating system (10);
the method **characterized by** the following steps:
compiling the measured temperatures of the at least a portion of the preform (12);
converting the compiled measured temperatures into a three-dimensional thermal image (36) representing the measured temperatures of the at least a portion of the preform (12); and
performing a processing step (28) based on analysis of the three-dimensional thermal image (36), wherein, when the analysis of the three-dimensional thermal image (36) results in a determination that the preform (12) does not have an acceptable temperature profile, the processing step (28) includes one of:
transporting the preform (12) from the exit (S) of the heating system (10) and back to the entrance (E) of the heating system (10) for additional heating by the at least one heating means (16); or
transporting the preform (12) from the exit (S) of the heating system (10) for recycling of the preform (12) when the preform (12) is rejected as unsuitable for blow molding.

2. The method of Claim 1, wherein the compiled temperatures are converted into a two-dimensional thermal image (38) representing the portion of the preform measured along its longitudinal axis and around its circumference in the converting step.

3. The method of Claim 2, further comprising a step of converting the three-dimensional thermal image (36) into a two-dimensional thermal image (38).

4. The method of Claim 3, wherein the two-dimensional thermal image (38) is a heat map.

5. The method of Claim 4, wherein during the heating step the preform (12) is caused to rotate at least 360° about its longitudinal axis.

6. The method of Claim 5, wherein the heat map represents measurements of the circumference of the preform from about 0° to about 359° of the at least a portion of the preform.

7. The method of Claim 6, wherein the at least a portion of the preform (12) is a body (22) thereof.

8. The method of Claim 1, further comprising a step of converting the compiled temperatures into a graphical image representing the temperatures of the least a portion of the preform (12) against a position of the measurement.

9. The method of Claim 1, wherein the camera (14) is an infrared camera.

## Patentansprüche

1. Verfahren zum Erhitzen eines Vorformlings (12) zum Blasformen, das Verfahren die folgenden Schritte umfassend:
Bereitstellen eines Vorformlings (12), der zum Blasformen geeignet ist;
Erhitzen des Vorformlings (12) während des Transports des Vorformlings (12) durch ein Heizsystem (10), das einen Förderer (26), mindestens ein Heizmittel (16) und eine Kamera (14) umfasst, wobei das Heizsystem (10) einen Eingang (E), an dem der Vorformling (12) in das Heizsystem eintritt, und einen Ausgang (S) umfasst, an dem der Vorformling (12) aus dem Heizsystem (10) austritt; und
Messen, durch die Kamera (14), der Temperatur mindestens eines Abschnitts des Vorformlings (12) entlang seiner Längsachse und um seinen Umfang herum nach Transport des Vorformlings am mindestens einen Heizmittel (16) des Heizsystems (10) vorbei und bevor der Vorformling (12) zum Ausgang (S) des Heizsystems (10) transportiert wird;
das Verfahren **gekennzeichnet durch** die folgenden Schritte:
Zusammenstellen der gemessenen Temperaturen des mindestens einen Abschnitts des Vorformlings (12);
Umwandeln der zusammengestellten gemessenen Temperaturen in ein dreidimensionales Wärmebild (36), das die gemessenen Temperaturen des mindestens einen Abschnitts des Vorformlings (12) darstellt; und
Durchführen eines Verarbeitungsschritts (28) auf Grundlage einer Analyse des dreidimensionalen Wärmebilds (36), wobei, wenn die Analyse des dreidimensionalen Wärmebilds (36) zu einer Bestimmung führt, dass der Vorformling (12) kein annehmbares Temperaturprofil aufweist, der Verarbeitungsschritt (28) eines des Folgenden umfasst:
Transportieren des Vorformlings (12) vom Ausgang (S) des Heizsystems (10) und zurück zum Eingang (E) des Heizsystems (10) zum zusätzlichen Erhitzen durch das mindestens eine Heizmittel (16); oder
Transportieren des Vorformlings (12) vom Ausgang (S) des Heizsystems (10) zum Recyclen des Vorformlings (12), wenn der Vorformling (12) als ungeeignet zum Blasformen verworfen wird.

2. Verfahren nach Anspruch 1, wobei die zusammengestellten Temperaturen in dem Umwandlungsschritt in ein zweidimensionales Wärmebild (38) umgewandelt werden, das den Abschnitt des Vorformlings darstellt, der entlang seiner Längsachse und um seinen Umfang herum gemessen wird.

3. Verfahren nach Anspruch 2, weiterhin einen Schritt des Umwandelns des dreidimensionalen Wärmebilds (36) in ein zweidimensionales Wärmebild (38) umfassend.

4. Verfahren nach Anspruch 3, wobei das zweidimensionale Wärmebild (38) eine Wärmekarte ist.

5. Verfahren nach Anspruch 4, wobei während des Heizschritts bewirkt wird, dass sich der Vorformling (12) mindestens 360° um seine Längsachse dreht.

6. Verfahren nach Anspruch 5, wobei die Wärmekarte Messungen des Umfangs des Vorformlings von ungefähr 0° bis ungefähr 359° des mindestens einen Abschnitts des Vorformlings darstellt.

7. Verfahren nach Anspruch 6, wobei der mindestens eine Abschnitt des Vorformlings (12) ein Körper (22) davon ist.

8. Verfahren nach Anspruch 1, weiterhin einen Schritt des Umwandelns der zusammengestellten Temperaturen in ein grafisches Bild umfassend, das die Temperaturen des mindestens einen Abschnitts des Vorformlings (12) gegen eine Position der Messung darstellt.

9. Verfahren nach Anspruch 1, wobei die Kamera (14) eine Infrarotkamera ist.

## Revendications

1. Procédé destiné à chauffer une préforme (12) en vue d'un moulage par soufflage, le procédé comprenant les étapes suivantes :
obtention d'une préforme (12) adaptée au moulage par soufflage ;
chauffage de la préforme (12) pendant le transport de la préforme (12) à travers un système de chauffage (10) comprenant un transporteur (26), au moins un moyen de chauffage (16) et une caméra (14), le système de chauffage (10) comportant une entrée (E) par laquelle la préforme (12) entre dans le système de chauffage et une sortie (S) par laquelle la préforme (12) sort du système de chauffage (10) ; et
mesure par la caméra (14) de la température d'au moins une partie de la préforme (12) le long de son axe longitudinal et autour de sa circonférence après que la préforme a été transportée au-delà de l'au moins un moyen de chauffage (16) du système de chauffage (10) et avant que la préforme (12) soit transportée jusqu'à la sortie (S) du système de chauffage (10) ;
le procédé étant **caractérisé par** les étapes suivantes :
compilation des températures mesurées de l'au moins une partie de la préforme (12) ;
conversion des températures mesurées compilées en une image thermique tridimensionnelle (36) représentant les températures mesurées de l'au moins une partie de la préforme (12) ; et
réalisation d'une étape de traitement (28) basée sur l'analyse de l'image thermique tridimensionnelle (36), dans lequel, quand l'analyse de l'image thermique tridimensionnelle (36) se solde par la détermination que la préforme (12) ne présente pas un profil de température acceptable, l'étape de traitement (28) comporte une des opérations suivantes :
transport de la préforme (12) depuis la sortie (S) du système de chauffage (10) pour la faire retourner à l'entrée (E) du système de chauffage (10) pour un chauffage supplémentaire par l'au moins un moyen de chauffage (16) ; ou
transport de la préforme (12) depuis la sortie (S) du système de chauffage (10) pour un recyclage de la préforme (12) quand la préforme (12) est rejetée parce qu'inadaptée au moulage par soufflage.

2. Procédé selon la revendication 1, dans lequel les températures compilées sont converties en une image thermique bidimensionnelle (38) représentant la partie de la préforme mesurée le long de son axe longitudinal et autour de sa circonférence à l'étape de conversion.

3. Procédé selon la revendication 2, comprenant en outre une étape de conversion de l'image thermique tridimensionnelle (36) en une image thermique bidimensionnelle (38).

4. Procédé selon la revendication 3, dans lequel l'image thermique bidimensionnelle (38) est une carte est une carte thermique.

5. Procédé selon la revendication 4 dans lequel, pendant l'étape de chauffage, on fait tourner la préforme (12) d'au moins 360° autour de son axe longitudinal.

6. Procédé selon la revendication 5, dans lequel la carte thermique représente des mesures de la circonférence de la préforme d'environ 0° à environ 359° de l'au moins une partie de la préforme.

7. Procédé selon la revendication 6, dans lequel l'au moins une partie de la préforme (12) est un corps (22) de celle-ci.

8. Procédé selon la revendication 1, comprenant en outre une étape de conversion des températures compilées en une image graphique représentant les températures de l'au moins une partie de la préforme (12) en fonction d'une position de la mesure.

9. Procédé selon la revendication 1, dans lequel la caméra (14) est une caméra infrarouge.
